# EUROPÄISCHE PATENTSCHRIFT

(11) **EP 1 940 237 B1**
(45) Veröffentlichungstag und Bekanntmachung des Hinweises auf die Patenterteilung: **26.01.2011**
(21) Anmeldenummer: 06806102.7
(22) Anmeldetag: 07.10.2006
(51) Int. Cl.: A22B 5/00

(54) **ANORDNUNG ZUM ABTRENNEN VON KÖRPERTEILEN VON SCHLACHTTIEREN**
ARRANGEMENT FOR THE SEPARATION OF BODY PARTS OF SLAUGHTERED ANIMALS
ENSEMBLE POUR SEPARER DES PARTIES DU CORPS D'ANIMAUX DE BOUCHERIE

(30) Priorität: 11.10.2005 DE 202005016074 U
(43) Veröffentlichungstag der Anmeldung: 09.07.2008
(73) Patentinhaber: Banss Schlacht- und Fördertechnik GmbH, 35216 Biedenkopf (DE)
(72) Erfinder: SCHMIDT, Frank, 35232 Dautphetal (DE); STARK, Marek, 35083 Wetter (DE)
(74) Vertreter: Stoffregen, Hans-Herbert
(86) Internationale Anmeldenummer: PCT/EP2006/009714
(87) Internationale Veröffentlichungsnummer: WO 2007/042234

(56) Entgegenhaltungen:
- EP-A- 1 702 514
- DE-A1- 3 842 278
- DE-U1-202005 004 098
- US-A- 4 904 514
- US-A- 5 180 329
- US-A- 5 421 773

## Beschreibung

Die Erfindung bezieht sich auf eine Anordnung zum Abtrennen von Beinen von Schlachttieren bzw. Teilen dieser, insbesondere Schweinepfoten oder Rinderklauen, mittels eines zangenartig zueinander verstellbare Schneiden aufweisenden Werkzeugs sowie einer die Schlachttiere hängend transportierenden Fördereinrichtung .

Eine entsprechende Anordnung ist der DE-A-38 52 278 zu entnehmen. Dabei werden die hängend transportierten Schlachttiere in der Position, in der die Vorderfüße abgeschnitten werden sollen, angehoben, um in vorgegebener Höhe bei festgehaltenen Vorderfüßen diese abtrennen zu können.

Alternativ besteht die Möglichkeit, Vorderbeine von Hand mittels pneumatisch oder hydraulisch betätigter Zangen abzutrennen. Durch den manuellen Eingriff können Fehler auftreten. Auch ist ein entsprechender Einsatz in automatischen Schlachtanlagen nachteilig.

Aus der DE-C-196 50 254 ist ein Schneidwerkzeug für die Zerlegung von Fleischprodukten bekannt. Dabei erfolgt eine prozessoptimierte Messer- und Schnittführung zum Erreichen hoher Schnittqualität.

Eine automatische Vorderbein-Schneideinrichtung in einer Transport-Schlachtstraße wird in der DE-A-98 42 278 beschrieben. Um die Vorderbeine auf Schneidmesser auszurichten, sind Hubarme vorgesehen. Beim Abtrennen werden die Beine mittels Halter festgehalten.

Aus der FR-A-2 807 621 ist eine Vorrichtung zum Abtrennen von Rinderklauen bekannt. Dabei erfolgt ein manuelles. Ausrichten einer Schneideinrichtung, die verschwenkbare Messer aufweist, um die Vorderklauen abzuschneiden, die zwischen dem Messer und einer diese schwenkbar aufnehmenden Halterung fixiert ist.

Die US-A-5,421,773 bezieht sich auf eine Vorrichtung zum Abtrennen der Haxen eines Schweines, wobei das Bein zwischen einem verschwenkbaren Anschlag und einem feststehenden Trennmesser angeordnet wird.

Um nach der US-A-3,916,484 ein Schlachttier zu zerlegen, wird dieses zuerst markiert, um sodann die Markierungen optisch zu erfassen und die gewünschten Schnitte durchzuführen.

Horizontal verlaufende Schnitte werden bei einem Schlachttier nach der US-A-4,557,014 durchgeführt, nachdem eine optische Erfassung des Schlachttieres wie Schweins erfolgt.

Die EP-A-0 601 812 bezieht sich auf eine automatische Ausweidvorrichtung für Schlachttiere, wobei ein besonderes Werkzeug for das Durchtrennen der Haut vorgesehen ist.

Ein robotergesteuertes Zerlegen von Schlachttierkörpem wird in der EP-B-1 263 292 beschrieben, wobei als Werkzeug Sägeblätter benutzt werden.

Der vorliegenden. Erfindung liegt die Aufgabe zugrunde, eine Anordnung zuvor beschriebener Art so weiterzubilden, dass ein automatisches Abtrennen von Körperteilen wie Beinen von Schlachttieren ermöglicht wird, wobei ohne höhenmäßige Ortsveränderung der Schlachttiere selbst ein positionsgenaues Abtrennen sichergestellt sein soll.

Zur Lösung der Aufgabe sieht die Erfindung im Wesentlichen vor, dass die Anordnung einen das Schlachttier zumindest im Bereich der abzutrennenden Beine bzw. deren Teile scannenden optischen Sensor, eine an eine Daten des optischen Sensors verarbeitende Steuerung angeschlossene Handhabungseinrichtung sowie das von der Handhabungseinrichtung betätigte Werkzeug umfasst, das in Abhängigkeit vom Abstand der abzutrennenden Beine bzw. deren Teile ein oder zwei Paar von Schneiden zum nacheinander erfolgenden oder gleichzeitigen Abtrennen der Beine bzw. deren Teile aufweist, dass die Schneiden um eine gemeinsame Schwenkachse verschwenkbare Messer sind und dass das Werkzeug zum Abtrennen eines Beines bzw. eines Teils von diesem zwei das abzutrennende Bein bzw. dessen Teil in Arbeitsbereich der Messer leitende Führungselemente aufweist, die einen V-förmigen Kanal begrenzen, dessen Breite sich in Richtung der Schwenkachse verringert.

Abweichend vom vorbekannten Stand der Technik muss das Schlachttier nicht auf das Werkzeug ausgerichtet werden. Vielmehr wird das Werkzeug in die Position verfahren, in der der Körperteil abgetrennt werden soll. Hierzu wird zunächst das Schlachttier zumindest in dem Bereich gescannt, in dem der Körperteil abgetrennt werden soll. Die Scanndaten werden sodann in digitalisierter Form einer Steuerung zugeführt, über die die Handhabungseinrichtung (Roboter) gesteuert wird, um das Werkzeug auf das Schlachttier auszurichten und die Körperteile positionsgenau abzutrennen. Es erfolgt ein automatisches Bearbeiten des Schlachttiers, so dass Fehlschnitte ausgeschlossen sind. Das Aufeinanderfolgen von Schlachttieren unterschiedlicher Größe beeinträchtigt die Genauigkeit des Abtrennens gleichfalls nicht.

Ferner ist vorgesehen, dass das Werkzeug zwei um eine gemeinsame Schwenkachse verschwenkbare Messer sowie zwei die abzutrennenden Körperteile in Arbeitsbereich der Messer leitende Führungselemente wie -bleche aufweist. Durch diese Maßnahmen ist sichergestellt, dass die abzutrennenden Körperteile wie insbesondere Schweinepfoten positionsgenau im Bereich zwischen die zueinander verschwenkbaren Messer gelangen, um diese sodann abtrennen zu können. Dabei ist vorgesehen, dass die Führupgselemente wie -bleche einen V-förmigen Kanal begrenzen, dessen Breite sich in Richtung der Schwenkachse verringert.

Um eine problemlose Ausrichtung des Werkzeugs auf die abzutrennenden Körperteile vorzunehmen, ist des Weiteren vorgesehen, dass das Werkzeug über eine senkrecht zur Schwenkachse verlaufende Flanschplatte mit einer Achse der Handhabungseinrichtung verbunden ist.

Insbesondere ist vorgesehen, dass das Werkzeug während des Abtrennens relativ zum kontinuierlich betriebenen Förderer stationär ist. Somit werden die Körperteile während des Transports des Schlachttiers abgetrennt. Werkzeug- und Förderbewegung des Schlachttieres sind folglich derart synchronisiert, dass das Werkzeug und das Schlachttier mit gleicher Geschwindigkeit während des Abtrennens bewegt werden.

Bei kleineren Schlachttieren wie Schweinen kann das Werkzeug zwei Paar von zueinander verschwenkbaren Messern aufweisen, um gleichzeitig die Pfoten abtrennen zu können. Bei größeren Schlachttieren wie Rindern weist das Werkzeug grundsätzlich nur ein Paar von Messern oder Schneiden auf, so dass nacheinander die Hufe abgetrennt werden. Unabhängig hiervon, ob das Werkzeug ein Paar oder zwei Paar von Schneiden bzw. Messern aufweist, ist jedem Paar eine Führungseinhchtung zugeordnet, die sicherstellt, dass beim Bewegen des Werkzeugs in Richtung des Schlachttiers dessen abzutrennender Körperteil in den Wirkbereich der Trenneinrichtung, also der Messer bzw. Schneiden gelangt.

Bei dem optischen Sensor handelt es sich insbesondere um einen Laserscanner. Als Handhabungseinrichtung kann ein Knickarmroboter benutzt werden, der von einer aus einem Gewebe bestehenden Schutzhülle umgeben ist.

Weitere Einzelheiten, Vorteile und Merkmale der Erfindung ergeben sich nicht nur aus den Ansprüchen, den diesen zu entnehmenden Merkmalen - für sich und/oder in Kombination sondern auch aus der nachfolgenden Beschreibung von der Zeichnung zu entnehmenden bevorzugten Ausführungsbeispielen.

Es zeigen:
- Fig. 1: einen Ausschnitt einer Schlachtstraße in Draufsicht,
- Fig. 2: den Ausschnitt gemäß Fig. 1 in Seitenansicht,
- Fig. 3.: den Ausschnitt gemäß Fig. 1 und 2 in Vorderansicht,
- Fig. 4: einen Roboter mit Schneidwerkzeug und
- Fig. 5: eine Ausführungsform eines Schneidwerkzeugs.

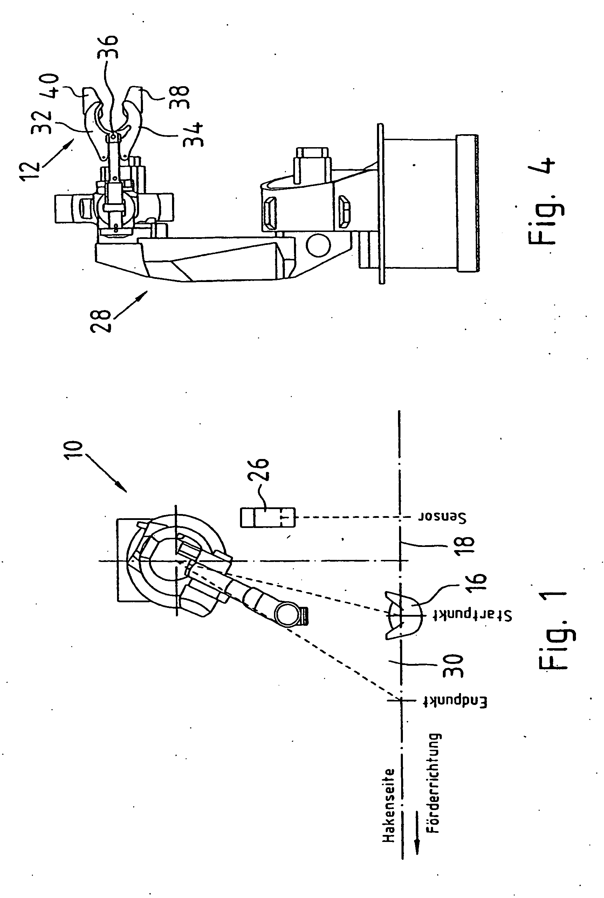

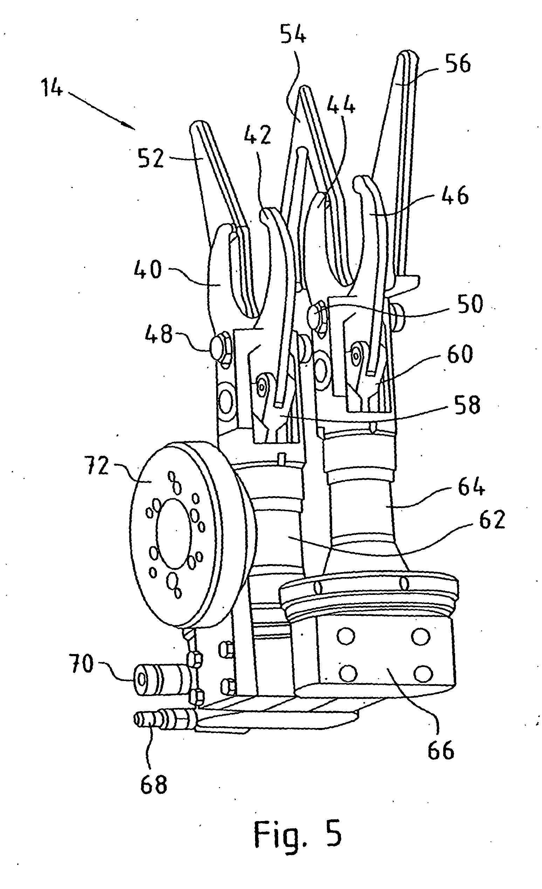

Um in Schlachtstraßen ein automatisches Abtrennen von Körperteilen zu ermöglichen, ist erfindungsgemäß vorgesehen, dass in die Schlachtstraße eine Handhabungseinrichtung in Form eines Roboters 10. integriert wird, mit der ein automatisches Abtrennen der Körperteile mittels eines Werkzeugs erfolgt, von denen in den Fig. 4 und 5 zwei Ausführungsformen dargestellt sind, die mit den Bezugszeichen 12 bzw. 14 gekennzeichnet sind.

Sollen im Ausführungsbeispiel mit den Schneidwerkzeugen 12 bzw. 14 die Vorderbeine eines Schweins bzw. Rinds abgetrennt werden, so besteht die Möglichkeit, auch andere Gestaltungen des Schneidwerkzeugs zu wählen bzw. andere Körperteile abzutrennen. Ausschlaggebend ist vielmehr, dass ein Ausrichten des jeweiligen Werkzeugs 12, 14 auf das Schlachttier automatisch während des Transports dieses erfolgt, um das entsprechende Körperteil abzutrennen.

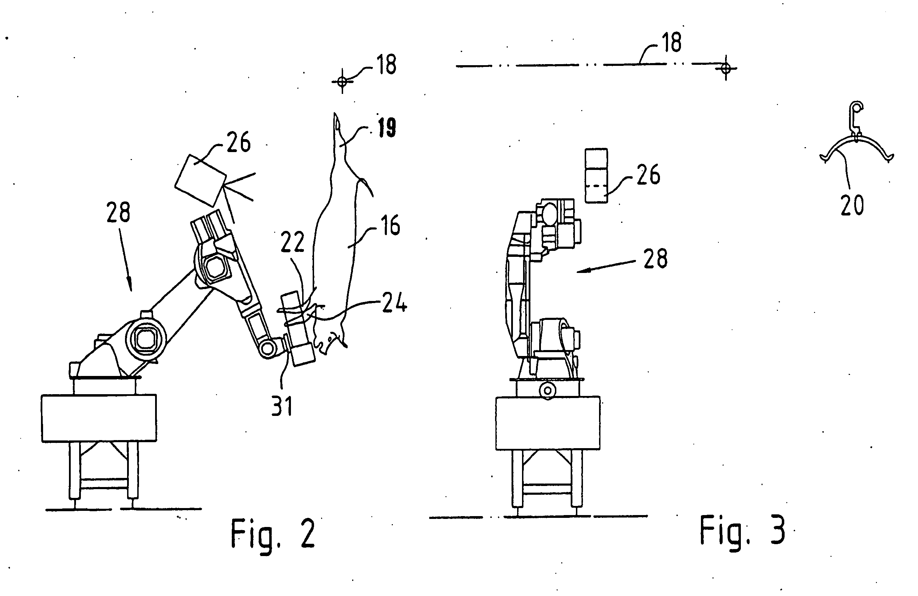

Im Ausführungsbeispiel wird ein Schlachttier in Form eines Schweins 16 entlang einer transportbahn 18 z. B. mittels eines Kettenförderers transportiert. Das Schlachttier 16 wird hängend an den Hinterpfoten 19 gefördert. Hierzu gehen die Hinterpfoten 19 von einem Spreizhaken 20 aus, wie dies rein beispielhaft in Fig. 3 angedeutet ist.

Um während des Transports ein automatisches Abtrennen der Vorderpfoten 22, 24 des Schlachttiers 16 zu ermöglichen, ohne dass ein manueller Eingriff erforderlich ist, wird erfindungsgemäß vorgeschlagen, dass das geschlachtete Tier 16 mittels eines optischen Sensors 26 z.B. in Form eines Laserscanners gescannt wird, um die Körperabmessungen und Position der Vorderpfoten 22, 24 zu erfassen. Die digitalisierten Daten des optischen Sensors 24 werden sodann über eine Steuerung einer Handhabungseinrichtung 28 zugeführt, die im Ausführungsbeispiel als Knickarmroboter ausgebildet ist. Unter Berücksichtigung der Transportgeschwindigkeit des Schlachtviehs 16 werden sodann in einem Arbeitsbereich, der durch den schraffierten Winkelbereich 30 in Fig. 1 angedeutet ist, die Vorderpfoten 22, 24 automatisch abgetrennt. Dadurch, dass das Schlachttier 16 mittels des optischen Sensors 26 in seiner Größe erfasst ist, kann ein positionsgenaues Ausrichten des Trennwerkzeugs 12, 14 auf die Vorderpfoten 22, 24 bzw. den Bereich erfolgen, in dem diese abgetrennt werden sollen. Somit ergibt sich eine optimale Bearbeitung.

Wie die Fig. 4 verdeutlicht, kann von dem Roboter 28, d.h., einem Arm 31 von diesem das Werkzeug 12, 14 ausgehen. Dabei unterscheidet sich das Werkzeug 12 der Fig. 4. von dem der Fig. 5 dahingehend, dass mit dem Werkzeug 14 beide Vorderpfoten 22, 24 gleichzeitig abgetrennt werden, wohingegen mit dem Werkzeug 12 nur ein Körperteil abtrennbar ist. Das Werkzeug 12 wird dabei vorzugsweise zum Abtrennen von Rinderhufen benutzt, so dass die Vorderhufe eines entsprechenden Schlachttiers nacheinander und nicht - wie bei einem Schwein als Schlachttier 16 - gleichzeitig abgetrennt werden. Unabhängig hiervon weisen die Werkzeuge 12, 14 bezüglich des Aufbaus und der Betätigung grundsätzlich eine gleiche Konstruktion auf.

Wie anhand der Fig. 4 verdeutlicht wird, weist das Werkzeug 12 zwei zangenartig zueinander verschwenkbare Schneiden 32, 34 auf, die um eine Achse 36 verschwenkbar sind. Das Verschwenken der Schneiden 32, 34 um die Achse 36 erfolgt vorzugsweise über in der Fig. 4 nicht dargestellte Pleuel, die ihrerseits über einen Kolben eines Hydraulikzylinders verstellbar sind.

Um den abzutrennenden Körperteil in den Bereich der Schneiden 32, 34, also in deren Arbeitsbereich zu führen, erstrecken sich vor den Schneiden 32, 34 in Richtung des Schlachttiers Führungselemente 38, 40, die einen V-förmigen Kanal begrenzen, der sich in Richtung der Schneiden 32, 34 verjüngt. Bei den Führungselementen 38, 40 handelt es sich vorzugsweise um Führungsbleche.

Eine entsprechende Konstruktion weist auch das Doppelwerkzeug 14 gemäß Fig. 5 auf. Wie die Darstellung verdeutlicht, umfasst das Werkzeug 14 zwei Paar von Schneiden 40, 42 bzw. 44, 46, die jeweils um parallel zueinander verlaufenden Achsen 48, 50 verschwenkbar sind.

Vor den Schneiden 40, 42, 44, 46 und zu diesen hinführend verlaufen Führungselemente 52, 54, 56, die zwei V-förmige Kanäle begrenzen, die sich in Richtung der Schneiden 40, 42, 44, 46 in ihrem Abstand verjüngen, um abzutrennende Körperteile bei einer Bewegung des Werkzeugs 14 in Richtung des Schlachttiers zu den Schneiden 40, 42, 44, 46 hinzuführen, damit diese sodann ordnungsgemäß abgetrennt werden können.

Zum Verschwenken der Schneiden 40, 42, 44, 46 gehen von deren hinteren Enden Pleuel 58, 60 aus, die über in zylindrischen Körpern 62, 64 angeordnete Hydraulik- oder Pneumatikzylinder verstellbar sind. Zum Betätigen dieser gehen von einem Basisabschnitt 66 des Werkzeugs 14 entsprechende Hydraulik- bzw. Pneumatikanschlüsse 68, 70 aus. Die so gebildete Einheit ist über eine Flanschplatte 42 mit dem Arm 31 des Roboters 28 verbunden, wie sich aus einem Vergleich der Fig. 2 und 5 ergibt.

Die Flanschplatte 42 geht dabei von dem Basisabschnitt 66 aus und erstreckt sich parallel zu der vor den zylindrischen Körpern 62, 64 aufgespannten Ebene, also senkrecht zu den Achsen 48, 50 der Schneiden 40, 42, 44, 46.

Die entsprechende Konstruktion findet sich auch bei dem Werkzeug 12 wieder, so dass gleiche Konstruktionsmerkmale vorliegen.

Zu dem Roboter ist anzumerken, dass es sich insbesondere um einen Knickarmroboter handelt, der von einer vorzugsweise aus einem Gewebe bestehenden Schutzhülle umgeben ist. Die Hülle kann auch aus Silikonmaterial bestehen. Unabhängig hiervon ist durch die Hülle sichergestellt, dass hygienischen Anforderungen voll entsprochen wird.

## Patentansprüche

1. Anordnung zum Abtrennen von Beinen (22, 24) von Schlachttieren (16) bzw.Teilen dieser, insbesondere Schweinepfoten oder Rinderklauen, mittels eines zangenartig zueinander verstellbare Schneiden (32, 34, 40, 42; 44, 46) aufweisenden Werkzeugs (12, 14) sowie einer die Schlachttiere hängend transportierenden Fördereinrichtung (18),
**dadurch gekennzeichnet,**
**dass** die Anordnung einen das Schlachttier (16) zumindest im Bereich der abzutrennenden Beine (22, 24) bzw. deren Teile scannenden optischen Sensor (26), eine an eine Daten des optischen Sensors verarbeitende Steuerung angeschlossene Handhabungseinrichtung (28) sowie das von der Handhabungseinrichtung betätigte Werkzeug (12, 14) umfasst, das in Abhängigkeit vom Abstand der abzutrennenden Beine (22, 24) bzw. deren Teile ein oder zwei Paar von Schneiden (32, 34, 40, 42, 44, 46) zum nacheinander erfolgenden oder gleichzeitigen Abtrennen der Beine bzw. deren Teile aufweist, dass die Schneiden um eine gemeinsame Schwenkachse (36, 48, 50) verschwenkbare Messer (32, 34, 40, 42, 44, 46) sind und dass das Werkzeug zum Abtrennen eines Beines bzw. eines Teils von diesem zwei das abzutrennende Bein (22, 24) bzw. dessen Teil in Arbeitsbereich der Messer leitende Führungselemente aufweist, die einen V-förmigen Kanal begrenzen, dessen Breite sich in Richtung der Schwenkachse (36, 48, 50) verringert.

2. Anordnung nach zumindest Anspruch 1,
**dadurch gekennzeichnet,**
**dass** das Werkzeug (12, 14) über eine senkrecht zur Schwenkachse (36,48, 50) verlaufende Flanschplatte (72) mit einer Achse der Handhabungseinrichtung (28) verbunden ist.

3. Anordnung nach zumindest Anspruch 1,
**dadurch gekennzeichnet,**
**dass** das Werkzeug (12, 14,) während des Abtrennens relativ zum kontinuierlich betriebenen Förderer (18) stationär ist.

4. Anordnung nach Anspruch 1,
**dadurch gekennzeichnet,**
**dass** der optische Sensor ein Laserscanner (26) ist.

5. Anordnung nach Anspruch 1,
**dadurch gekennzeichnet,**
**dass** die Handhabungseinrichtung (28) ein Knickarmroboter ist, der von einer vorzugsweise aus einem Gewebe bestehenden Schutzhülle umgeben ist.

## Claims

1. Arrangement for severing legs (22, 24) from slaughtered animals (16) or parts thereof, in particular pigs' trotters or cattle hooves, by means of a tool (12, 14) having blades (32, 34, 40, 42, 44, 46) adjustable relative to one another in pincer form and by means of a conveying device (18) transporting the slaughtered animals is suspended manner,
**wherein**
the arrangement comprises an optical sensor (26) scanning the slaughtered animal (16) at least in the area of its legs (22, 24) or parts thereof to be severed, a handling device (28) connected to a control unit processing the data of the optical sensor, and the tool (12, 14) operated by the handling device, said tool having, depending on the distance between the legs (22, 24) or parts thereof to be severed, one or two pairs of blades (32, 34, 40, 42, 44, 46) for subsequent or simultaneous severing of the legs or parts thereof, wherein the blades are knives ((32, 34, 40, 42, 44, 46) swivellable about a common swivel axis (36, 48, 50) and wherein the tool for severing a leg or a part thereof has two guide elements for guiding the leg (22, 24) or part thereof to be severed into the working range of the knives and limiting a V-shaped channel whose width decreases in the direction of the swivel axis (36, 48, 50).

2. Arrangement according to at least Claim 1,
**wherein**
the tool (12, 14) is connected to an axis of the handling device (28) via a flange plate (72) running perpendicular to the swivel axis (36, 48, 50).

3. Arrangement according to at least Claim 1,
**wherein**
during severing the tool (12, 14) is stationary relative to the continuously operated conveyor (18).

4. Arrangement according to Claim 1,
**wherein**
the optical sensor is a laser scanner (26).

5. Method according to Claim 1,
**wherein**
the handling device (28) is a jointed-arm robot surrounded by a protective cover preferably comprising a fabric.

## Revendications

1. Ensemble pour séparer des pattes (22, 24) d'animaux de boucherie (16) ou des parties de ceux-ci, en particulier des pattes de porcs ou des sabots de bovidés, au moyen d'un outil (12, 14) présentant des lames (32, 34, 40, 42, 44, 46) déplaçables en pince l'une par rapport l'autre, ainsi que d'un dispositif de transport (18) transportant les animaux de boucherie suspendus,
**caractérisé en ce**
**que** le dispositif comprend un capteur optique (26) balayant l'animal de boucherie (16) au moins dans la zone des pattes (22, 24) ou des parties à découper, un dispositif de manipulation (28) raccordé à un système de commande traitant les données du capteur optique, ainsi que l'outil (12, 14) actionné par le dispositif de manipulation, lequel outil présente, en fonction de l'écartement des pattes (22, 24) ou des parties à séparer, une ou deux paires de lames (32, 34, 40, 42, 44, 46) pour la séparation simultanée ou consécutive des pattes ou des parties, que les lames sont des couteaux (32, 34, 40, 42, 44, 46) pouvant être pivotés autour d'un axe de pivotement commun (36, 48, 50), et que, pour séparer une patte ou une partie de celle-ci, l'outil présente deux éléments de guidage conduisant la patte (22, 24) à séparer ou une partie de celle-ci dans la zone d'action des couteaux, lesquels éléments de guidage limitent un canal en forme de V dont la largeur diminue en direction de l'axe de pivotement (36, 48, 50).

2. Dispositif selon au moins la revendication 1,
**caractérisé en ce**
**que** l'outil (12, 14) est relié à un axe du dispositif de manipulation (28) par l'intermédiaire d'une plaque de raccordement (72) s'étendant perpendiculairement à l'axe de pivotement (36,48, 50).

3. Dispositif selon au moins la revendication 1,
**caractérisé en ce**
**que**, pendant la séparation, l'outil (12, 14) est immobile par rapport au convoyeur (18) fonctionnant en continu.

4. Dispositif selon la revendication 1,
**caractérisé en ce**
**que** le capteur optique est un scanner laser (26).

5. Dispositif selon la revendication 1,
**caractérisé en ce**
**que** le dispositif de manipulation (28) est un robot à bras articulé qui est entouré d'une enveloppe de protection composée de préférence d'un tissu.
